# EUROPEAN PATENT APPLICATION

(11) **EP 2 319 899 A1**
(43) Date of publication of application: **11.05.2011**
(21) Application number: 10151175.6
(22) Date of filing: 20.01.2010
(51) Int. Cl.: C10B 53/07, C10B 57/02, C10B 47/44, C09C 1/48, C10G 1/10

(54) **Continuous pyrolysis system and its application**

(30) Priority: 10.11.2009 TW 98138048
(71) Applicant: Enrestec Inc., Kaohsiung City 802 (TW)
(72) Inventor: Wu, Chun-Yao, 802 Kaohsiung City (TW); Chang, Jui-Yung, 802 Kaohsiung City (TW)
(74) Representative: Viering, Jentschura & Partner

(57) **Abstract**

A continuous pyrolysis system, comprising a reactor with a charge port, a discharge port and a first gas outlet and a first axial transporting structure installed therein; a hest-source generator for supplying heat necessary for carrying out a pyrolysis reaction in the reactor; a solid-product reformer for performing a reforming process for the solid product of the pyrolysis reaction, with a first solid product inlet, a first solid product outlet and a second gas outlet, and a second axial transporting structure installed therein, wherein the first solid product inlet is communicated with the discharge port of the reactor; and a gas-barrier component for preventing the gas product of the pyrolysis reaction from entering the solid product reformer and transporting the solid product of the pyrolysis reaction into the solid-product reformer, wherein the gas barrier component is installed in a channel communicating the first solid product inlet and the discharge port of the reactor.

## Description

This application claims priority to Taiwan Patent Application No. 098138048 filed on November 10, 2009.

### CROSS-REFERENCES TO RELATED APPLICATIONS

Not applicable.

### BACKGROUND OF THE INVENTION

### Field of the Invention

The present invention relates to a continuous pyrolysis system; more particularly, the present invention relates to a continuous pyrolysis system having a solid product reformer, which is especially suitable for processing waste tires.

### Descriptions of the Related Art

The process of recycling waste tires generally falls into one of two categories. One is the physical processing method, in which the waste tires are first broken up, then the steel wires, nylon and rubber are separated, and finally the rubber is recycled to produce reclaimed rubber. However, as a kind of recycled material, the reclaimed rubber has poor quality and is unsuitable for use as a raw material to produce tires, so such a recycling process is known to have a low resource utilization factor and poor economic benefits. The other processing method incorporates a chemical process, according to which the waste tires are broken up, an appropriate percentage of catalyst is added, and then the waste tires are pyrolyzed at an appropriate temperature and an appropriate pressure to produce gaseous products, blended oils, carbon black, residuals and the like. The latter pyrolysis method provides substantial economical benefits. As a result, current research focuses on this pyrolysis method.

According to the existing technologies, pyrolysis products of waste tires include combustible gases, blended oils, carbon black and the like. Among these pyrolysis products, combustible gases may be used to provide the heat necessary for the pyrolysis of the waste tires; the blended oils may be subjected to a further processing through, for example, a fractionating process to separate the by-products of high economic values, such as light oil, gasoline, kerosene, diesel oil and heavy oil. As for the carbon black, due to its complex composition and very instable quality thereof, it still cannot be used for industrial purposes and even causes problems associated with subsequent disposal.

However, in industrial applications, carbon black may be the best and most commonly used black pigment because of its good heat resistance, chemical resistance and light fastness as well as its good tinting strength and hiding power. At present, carbon black is mostly produced through an additional process, for example, by combusting or pyrolyzing carbonaceous raw materials such as natural gases or crude oils. However, this requires additional costs for the production of the carbon black, consumes valuable petrochemical materials and exacerbates the problems of environmental pollution and carbon dioxide emission. During times of environment protection awareness, reforming the carbon blacks of poor quality obtained from pyrolysis of the waste tires into usable carbon blacks of great commercial values will not only solve the disposal problem of waste carbon blacks, but also prevent damage to the environment caused by carbon black production. Therefore, it is highly desirable in the art to provide a pyrolysis system, for use in waste tire pyrolysis for example, that features stable operation, stable and acceptable product quality and can prevent the generation of unusable pyrolysis products that would cause pollution to the environment.

In view of this, the present invention provides a pyrolysis system capable of operating continuously that, when used for pyrolysis of waste tires, can produce carbon black with a very low sulfur content and a great economic value for use in industrial purposes.

### SUMMARY OF THE INVENTION

An objective of this invention is to provide a continuous pyrolysis system, comprising: a reactor having a charge port, a discharge port and a first gas outlet and a first axial transporting structure installed therein; a heat source generator for supplying heat necessary for carrying out a pyrolysis reaction in the reactor; a solid product reformer for performing a reforming process on the solid product of the pyrolysis reaction, having a first solid product inlet, a first solid product outlet and a second gas outlet, and a second axial transporting structure installed therein, wherein the first solid product inlet communicates with the discharge port of the reactor; and a gas barrier component for preventing the gas product of the pyrolysis reaction from entering the solid product reformer and transporting the solid product of the pyrolysis reaction into the solid product reformer, with the gas barrier component being installed in a channel communicating the first solid product inlet and the discharge port of the reactor.

Another objective of this invention is to provide a continuous pyrolysis method that uses the continuous pyrolysis system described above.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG. 1** is an embodiment of a continuous pyrolysis system of the present invention;
**FIG. 2** is a cross-sectional view of a reactor in an embodiment of the continuous pyrolysis system of the present invention;
**FIG. 3** is a cross-sectional view of a solid product reformer in an embodiment of the continuous pyrolysis system of the present invention; and
**FIG. 4** is a cross-sectional view of a solid product cooler in an embodiment of the continuous pyrolysis system of the present invention.

### DESCRIPTION OF THE PREFERRED EMBODIMENT

Unless otherwise stated, "a," "an," "the" and the like terms used in this specification (especially in the Claims) shall be interpreted to include both a singular and a plural form.

Herein below, some embodiments of the present invention will be described in detail; however, instead of being limited to what is described herein, the present invention may also be applied to different embodiments without departing from the spirit of the present invention. Furthermore, for purposes of clarity, the dimensions of the individual elements or regions may be exaggerated in the attached drawings rather than being drawn to scale.

The continuous pyrolysis system of the present invention comprises a reactor, a heat source generator, a solid product reformer and a gas barrier component.

The reactor has a charge port, a discharge port, a first gas outlet, and a first axial transporting structure installed therein. The reactor is preferably a "tubular reactor," although it is not merely limited thereto. The term "tubular reactor" generally refers to any appropriate reactor in which the space for containing materials is shaped like a tube. Thus, while materials charged into the reactor through the charge port are undergoing the reaction inside the reactor, the materials are moved forward gradually by the first axial transporting structure along the axial direction of the reactor and finally discharged out of the reactor through the discharge port. In some embodiments of the present invention, the first axial transporting structure has a central shaft and a plurality of auger blades. Any appropriate drive device (e.g., an electric motor) may be used to drive the first axial transporting structure, and depending on the practical needs (e.g., species, composition and size of the material to be pyrolyzed), the rotational speed of the auger blades of the first axial transporting structure may be adjusted to control the dwell time of the materials to be pyrolyzed within the reactor.

Optionally, the reactor may include a plurality of cascaded sub-reactors. The first axial transporting structure is correspondingly comprised of a plurality of axial transporting sub-structures that are installed in the cascaded sub-reactors respectively. Each of the axial transporting sub-structures has a central shaft and a plurality of auger blades, and is driven by an appropriate drive device such as an electric motor. For example, each of the sub-reactors may have the discharge port thereof communicate with the charge port of the downstream sub-reactor, and the last sub-reactor may have the discharge port thereof communicate with the first solid product inlet of the solid product reformer to complete the cascade of sub-reactors so that the materials to be pyrolyzed can be transported between the sub-reactors. As used herein, the term "communicate" may refer to any appropriate forms; for example, two sub-reactors may communicate with each other through a pipeline, or the walls of two sub-reactors may make contact with each other and communicate through the openings in the contact areas. By using the plurality of sub-reactors and individual axial transporting structures, an excessive load that would have been experienced by the single axial transporting structure is prevented. Additionally, the sub-reactors may be arranged on top of each other to make full use of the space.

The heat source generator is used to supply the heat necessary for carrying out a pyrolysis reaction in the reactor, and preferably also to supply the heat necessary for the solid product reformer. In an embodiment of the present invention, a combustion furnace is used as the heat source generator, which supplies heat in the form of high-temperature gases by combusting any appropriate fuel oils and/or combustible gases and pyro-oils recycled from the pyrolysis reaction. The heat source generator that uses combustible gases and pyro-oils recycled from the pyrolysis reaction may have less demands on the energy source and reduce the operation costs.

It has been found that because the pyrolysis reaction may generate a variety of gaseous, liquid and/or solid products (e.g., carbon black), the solid products thus obtained tend to contain a certain content of gaseous or liquid impurities regardless of any improved pyrolysis reaction. Such impurities make it difficult to make use of the solid products, resulting in a degraded economic value of the solid products. For example, for processing waste tires, the solid products (most of which are carbon black) resulting from the pyrolysis usually contain complex compositions of the pyro-oils and pyro-gases, which make it difficult to use for commercial purposes (e.g., for use as pigments) and indirectly cause pollution to the environment. In view of this, the continuous pyrolysis system of the present invention is particularly designed to comprise a solid product reformer and a gas barrier component to effectively improve the quality of the products, especially the solid products, of the pyrolysis reaction, thereby increasing the market value of the products.

The solid product reformer has a first solid product inlet, a first solid product outlet, a second gas outlet, and a second axial transporting structure installed therein. The first solid product inlet communicates with the discharge port of the reactor. The reactor is preferably a "tubular reactor", although it is not merely limited thereto. Thus, while solid products charged into the solid product reformer through the first solid product inlet are being reformed inside the solid product reformer, the solid products are moved forward gradually by the second axial transporting structure along the axial direction of the solid product reformer and finally discharged out of the solid product reformer through the first solid product outlet.

Similar to the first axial transporting structure, in some embodiments of the present invention, the second axial transporting structure also has a central shaft and a plurality of auger blades. Any appropriate drive unit (e.g., an electric motor) may be used to drive the second axial transporting structure, and depending on the practical needs (e.g., species, composition and size of the material to be pyrolyzed), the rotational speed of the auger blades of the second axial transporting structure may be adjusted to control the dwell time of the solid products in the solid product reformer.

The solid product reformer of the present invention is used in conjunction with a gas barrier component. The gas barrier component is installed in a channel communicating with the first solid product inlet and the discharge port of the reactor and is used to prevent the gas products of the pyrolysis reaction from entering the solid product reformer. There is no particular limitation on the gas barrier component that can be used in the present invention, and it may be any conventional component capable of delivering a gas barrier effect; for example, in an embodiment of the present invention, a gastight valve is used as the gas barrier component.

Similar to the combination of the reactor and the first axial transporting structure, the solid product reformer may also comprise a plurality of sub-reformers, and correspondingly, the second axial transporting structure may be comprised of a plurality of second axial transporting sub-structures that are installed in each of the sub-reformers respectively.

Optionally, the continuous pyrolysis system of the present invention further comprises a solid product processing device and/or a gas product processing device disposed at the downstream of the system for further processing of the solid products and/or gas products that have been reformed.

The solid product processing device communicates with the first solid product outlet. There is no particular limitation on the solid product processing device that can be used in the present invention, and it may optionally comprises various appropriate physically/chemically separating devices for further processing of the solid products of the pyrolysis reaction, such as a screening device (e.g., a screen grader or a magnetic separator), a grinding device (e.g., a grinding machine), a packaging device or the like. In one embodiment of the present invention, to prevent the combustion of high-temperature solid products of the pyrolysis reaction in subsequent processing and transporting processes, the solid product processing device comprises a solid product cooler for cooling the high-temperature reformed solid products from the solid product reformer. The solid product cooler has a second solid product inlet, a second solid product outlet, and a third axial transporting structure installed therein. The second solid product inlet communicates with the first solid product outlet, while the third axial transporting structure has substantially the same functionality and structure as those of the first and the second axial transporting structures. Also, similar to the combination of the reactor and the first axial transporting structure, the solid product cooler and the third axial transporting structure may also be comprised of a plurality of sub-coolers and sub-structures respectively.

The gas product processing device communicates with the first gas outlet and the second gas outlet. There is no particular limitation on the gas product processing device that can be used in the present invention, and generally, it may optionally comprise various condensing devices or separating devices. In some embodiments of the present invention, the gas product processing device comprises a first condenser a pyro-oil cooler and an oil-mud separator communicating with the first condenser. The first condenser has a first gas inlet, a third gas inlet and a washing-oil inlet, and communicates with the first gas outlet of the reactor through the first gas inlet; the oil-mud separator comprises a first pyro-oil outlet and a mud-discharging opening; and the pyro-oil cooler has a first pyro-oil inlet and a second pyro-oil outlet, and communicates with the first pyro-oil outlet of the oil-mud separator through the first pyro-oil inlet. The second cooler should preferably be disposed at the downstream of the first cooler to provide a better cooling and separating effect.

The continuous pyrolysis system of the present invention may be used for the pyrolysis of various materials, for example, waste tires, waste plastics, waste wood, or agricultural biowaste, and is preferably used for the processing of waste tires.

For better understanding of the present invention, an embodiment of the continuous pyrolysis system of the present invention, which may be used for processing waste tires, will be illustrated hereinafter with reference to the attached drawings. In the attached drawings, the dimensions of the individual components are only provided for purposes of illustration, but do not represent the actual dimensional scale.

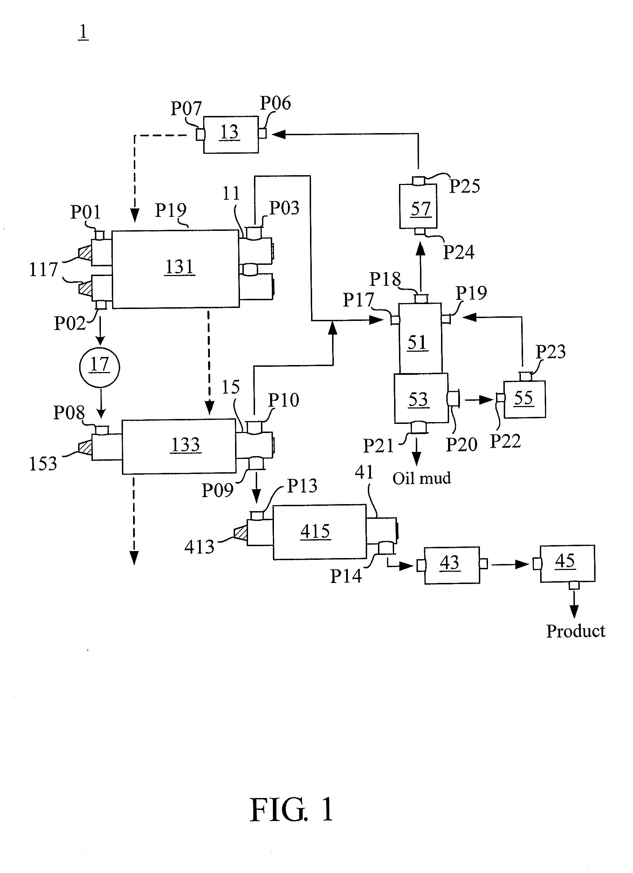

**FIG. 1** illustrates a schematic view of the arrangement of a continuous pyrolysis system **1** according to an embodiment of the present invention. The continuous pyrolysis system **1** comprises a reactor **11**, a combustion furnace **13** for use as a heat source generator, a solid product reformer **15** and a gastight valve **17** for use as a gas barrier component. The continuous pyrolysis system **1** comprises the following: a gas product processing device, consisting of a first condenser **51**, an oil-mud separator **53**, a pyro-oil cooler **55** and a second condenser **57**; and a solid product processing device, consisting of a solid product cooler **41**, a screening device **43** and a grinding device **45**. The combustion furnace **13** is adapted to generate hot air for providing a heat source necessary for the reactor **11** and the solid product reformer **15**.

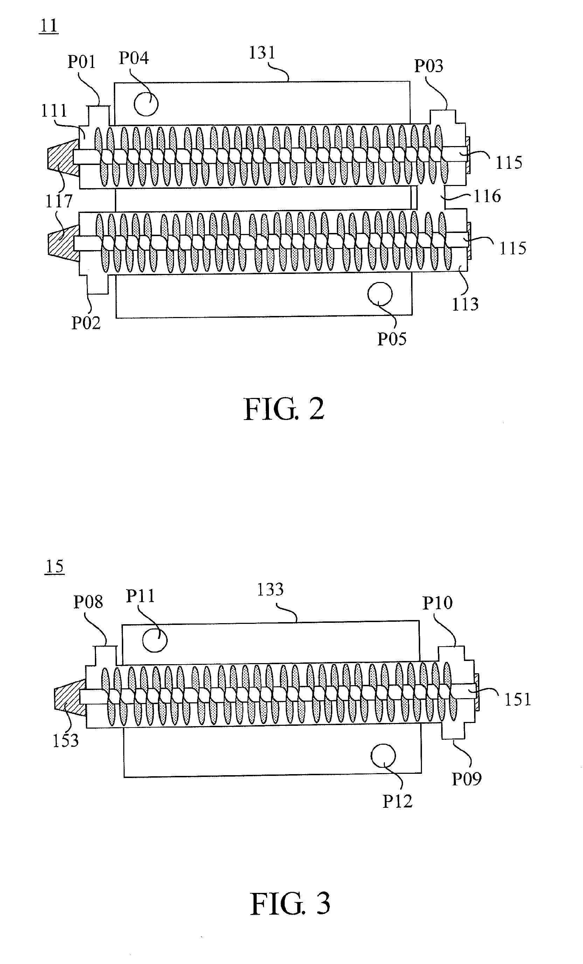

**FIG. 2** illustrates a cross-sectional view of the reactor **11**. The reactor **11** comprises a charge port **P01**, a discharge port **P02** and a first gas outlet **P03**. In this embodiment, the reactor **11** comprises two sub-reactors disposed on top of each other, namely, a first sub-reactor **111** and a second sub-reactor **113** which communicate with each other through a communicating port **116**. An axial transporting structure is installed in the reactor **11**. In this embodiment, the axial transporting structure comprises two first axial transporting sub-structures **115** installed in the first sub-reactor **111** and the second sub-reactor **113** respectively, and each of the first axial transporting sub-structures **115** is coupled to a corresponding drive device **117**. Each of the first axial transporting sub-structures **115** comprises a central shaft and a plurality of auger blades. Additionally, the reactor **11** is enclosed by a first hot air chamber **131**. The first hot air chamber **131** comprises a first hot air inlet **P04** adapted to receive hot air from the combustion furnace **13** and a first hot air outlet **P05** adapted to vent the hot air out of the first hot air chamber **131**. As shown in **FIG. 1**, the combustion furnace **13** comprises a fuel port **P06** for receiving fuels and an air outlet **P07** for outputting the hot air and communicating with the first hot air inlet **P04**.
   Materials to be pyrolyzed are fed into the reactor **11** through the charge port **P01** to undergo a pyrolysis reaction therein. The gas products of the pyrolysis reaction are discharged through the first gas outlet **P03**, while solid products of the pyrolysis reaction are discharged through the discharge port **P02**. In the reactor **11**, the materials to be pyrolyzed are first fed into the first sub-reactor **111** where, through rotation of the first axial transporting sub-structure **115**, the materials are moved forward gradually along the axial direction of the first axial transporting sub-structure **115** while undergoing the pyrolysis reaction therein. The first sub-reactor **111** and the second sub-reactor **113** are disposed on top of each other, so once the waste tires undergoing the pyrolysis reaction move forward to the communication port **116**, the waste tires will drop down into the second sub-reactor **113** and then, through the rotation of the first axial transporting sub-structure **115** of the second sub-reactor **113**, continue to move forward in the second sub-reactor **113** for further pyrolysis. The solid products of the pyrolysis will be discharged through the discharge port **P02**, while the gas products of the pyrolysis will be discharged through the first gas outlet **P03**.
**FIG. 3** illustrates a cross-sectional view of the solid product reformer **15**. The solid product reformer **15** comprises a first solid product inlet **P08**, a first solid product outlet **P09** and a second gas outlet **P10**. A second axial transporting structure **151** is installed in the solid product reformer **15**. Similar to the reactor **11**, the solid product reformer **15** may also comprise a plurality of solid product sub-reformers, and correspondingly, the second axial transporting structure **151** may be comprised of a plurality of second axial transporting sub-structures that are installed in each of the sub-reformers respectively. For convenience, descriptions are made herein with reference to a simple case in which the solid product reformer **15** is not provided with sub-reformers and second axial transporting sub-structures as shown in **FIG. 3**.
In **FIG. 3**, the second axial transporting structure **151** is coupled to a drive device **153**. The second axial transporting structure **151** comprises a central shaft and a plurality of auger blades. The solid product reformer **15** is enclosed by a second hot air chamber **133**. The second hot air chamber **133** comprises a second hot air inlet **P11** and a second hot air outlet **P12**. The second hot air inlet **P11** communicates with the first hot air outlet **P05** to receive hot air from the first hot air chamber **13** to maintain the solid product reformer **15** at a desired temperature. The hot air is then vented through the second hot air outlet **P12**. The first solid product inlet **P08** communicates with the discharge port **P02**, and in a channel communicating with the first solid product inlet **P08** and the discharge port **P02**, a gastight valve **17** is disposed to prevent entry of the gas products of the pyrolysis reaction into the solid product reformer **15**. The solid products of the pyrolysis reaction are discharged from the discharge port **P02**, pass through the gastight valve **17**, and are then fed through the first solid product inlet **P08** into the solid product reformer **15** to be reformed therein, thereby resulting in solid products of great economic value with stable compositions.

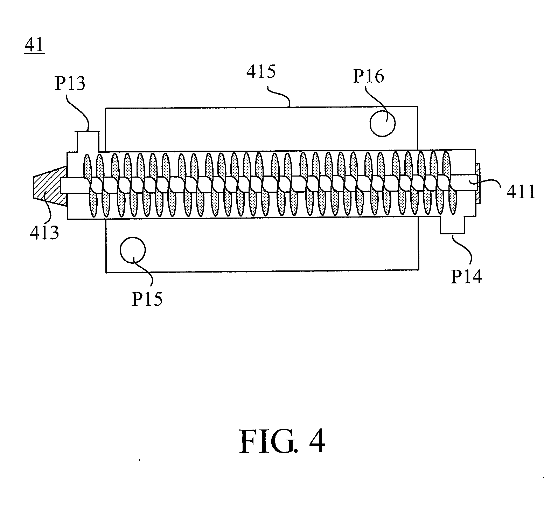

With reference to **FIGs. 1** and **4**, **FIG. 4** is a cross-sectional view of a solid product cooler **41** in the solid product processing device. The solid product cooler **41**, which is adapted to cool the reformed high-temperature solid products, comprises a second solid product inlet **P13**, a second solid product outlet **P14** and a third axial transporting structure **411** installed in the solid product cooler.

Similar to the reactor **11**, the solid product cooler **41** may also comprise a plurality of solid product sub-coolers, and correspondingly, the third axial transporting structure **411** may be comprised of a plurality of third axial transporting sub-structures that are installed in each of the sub-coolers respectively. For convenience, descriptions are made herein with reference to a simple case in which the solid product cooler **41** is not provided with sub-coolers and third axial transporting sub-structures as shown in **FIG. 4**.

In **FIG. 4**, the third axial transporting structure **411** has a central shaft and a plurality of auger blades, and is coupled to a drive device **413**. The third axial transporting structure **411** has substantially the same functionality as that of the first axial transporting sub-structure **115**. The second solid product inlet **P13** communicates with the first solid product outlet **P09**. Any appropriate means may be adopted to achieve a cooling effect, and in this embodiment, a cooling chamber **415** enclosing the solid product cooler **41** is used. The cooling chamber **415** comprises a cooling water inlet **P15** and a cooling water outlet **P16**. By introducing cooling water through the cooling water inlet **P15** into the cooling chamber **415**, a cooling effect is achieved, and then the cooling water drains away through the cooling water outlet **P16**.

After being reformed, the high-temperature solid products are fed through the second solid product inlet **P13** into the solid product cooler **41** to be cooled therein, and by means of the third axial transporting structure **411**, are moved forward in the solid product cooler **41** to obtain cooled reformed solid products at the second solid product outlet **P14**. Then, the cooled reformed solid products are transported to the screening device **43** to be screened therein and also to the grinding device **45** to be ground therein, thereby obtaining the desired products.

Referring back to **FIG. 1**, the first condenser **51** has a first gas inlet **P17**, a third gas inlet **P18** and a washing-oil inlet **P19**, and communicates with the first gas outlet **P03** of the reactor **11** through the first gas inlet **P17**; the oil-mud separator **53** has a first pyro-oil outlet **P20** and a mud-discharging opening **P21**, and substantially communicates with the first condenser **51**; and the pyro-oil cooler **55** has a first pyro-oil inlet **P22** and a second pyro-oil outlet **P23**, and communicates with the first pyro-oil outlet **P20** of the oil-mud separator **53** through the first pyro-oil inlet **P22**. The second condenser **57** has a third gas inlet **P24** communicating with the third gas outlet **P18** and a fourth gas outlet **P25**.

After being fed into the first condenser **51** through the first gas inlet **P17**, the gas products of the pyrolysis reaction are washed by oils introduced through the washing-oil inlet **P19** for purposes of cooling. As a result, condensable components (e.g., pyrolyzed oils) in the gas products are condensed into liquid and separated from incondensable components. The incondensable gas components are introduced out of the third gas outlet **P18** and fed through the third gas inlet **P24** into the second condenser **57** for further condensing. Thus, oils and gases uncondensed in the first condenser **51** are condensed to a lower temperature so that pyro-oils with a low flashing point can be collected and optionally introduced into the combustion furnace **13** for use as fuels or stored. On the other hand, the resulting gas may be recycled or used as a fuel for the combustion furnace **13**. The liquid components condensed in the first condenser **51** are then introduced into the oil-mud separator **53** disposed beneath and communicating with the first condenser **51** for separation of mud impurities. The mud impurities are periodically discharged out of the mud-discharging opening **P21** to, for example, a mud processing device for further processing. The resulting pyro-oil is introduced from the first pyro-oil outlet **P20** through the first pyro-oil outlet **P22** into the pyro-oil cooler **55** to be further cooled therein. A portion of the cooled pyro-oil is introduced by, for example, a pump from the washing-oil inlet **P19** into the first condenser **51** for use as a washing oil, and the remaining portion of the pyro-oil may be optionally stored in an oil storage tank, used as a fuel of the combustion furnace **13**, or subjected to further processing to produce oil products of a greater economic value.

The present invention further provides a continuous pyrolysis method, which adopts the continuous pyrolysis system of the present invention. In the continuous pyrolysis method, optionally, a solid product processing procedure may be performed on the solid products of the pyrolysis reaction, or a gas product processing procedure may be performed on the gas products of the pyrolysis reaction. Hereinafter, taking the processing of waste tires as an example, the continuous pyrolysis method will be described with reference to the continuous pyrolysis system **1** described above.

Optionally, prior to the pyrolysis process, a pre-processing device such as a crusher or a cutting machine is used to pre-process the waste tires into appropriate sizes (e.g., processed into particle sizes ranging from about 5 cm to about 7 cm). Then, the waste tire granules of appropriate sizes are fed into the reaction chamber **11** through the charge opening **P01** at a certain feeding rate.

The reactor **11** is kept at a pyrolysis temperature of about 350°C to 550°C, and preferably of about 350°C to 450°C. In this embodiment, heat necessary for the reactor **11** and the solid product reformer **15** is supplied by the combustion furnace **13**. At the initial stage of operation, the diesel or a fuel oil is used as a fuel of the combustion furnace **13**; however, once the pyrolysis reaction starts, combustible gases (and optionally pyro-oils) resulting from the pyrolysis reaction may be used as fuels to reduce the cost. Here, a flow rate of the fuel accounts for about 15wt% to about 20wt% of the charging rate. The high-temperature gas generated by the combustion furnace **13** is introduced, by means of windmill drafting for example, into the first combustion chamber **131** through the first hot air inlet **P04** to keep a temperature necessary for the pyrolysis reaction in the reactor **11**, and then introduced from the first hot air outlet **P05** through the second hot air inlet **P11** into the second combustion chamber **133** to keep a temperature necessary for the reforming process in the solid product reformer **15**.

After being introduced into the reactor **11**, the waste tire granules are moved forward in the reactor **11** by the first axial transporting structure **115** to be fully pyrolyzed therein. The rotational speed of the first axial transporting sub-structure **115** is controlled by the drive device **117** to control the dwell time of the materials in the reactor **11**. In some embodiments of the present invention, the materials are allowed to dwell in the reactor **11** for about 40 min to 70 min in total to ensure a good pyrolysis effect.

In the reactor **11**, once the materials are transported to the tail end of the first sub-reactor **111**, the remaining carbon black mixture and the un-pyrolyzed waste tire granules will drop down into the second sub-reactor **113** through the communicating opening **116** for further pyrolysis. Here, the materials pass through the second sub-reactor **113** in just the same way as that in the first sub-reactor **113**. During the pyrolysis reaction, the oil-gas products (i.e., a oil-gas mixture) resulting from the pyrolysis reaction are transported through the first gas outlet **P03** to the gas product processing device to undergo a gas product processing procedure therein, while the solid products are transported through the discharge port **P02** to the solid product reformer **15** to undergo a reforming process therein. The disposition of the gastight valve **17** is necessary because it can prevent entry of the gas products of the pyrolysis reaction into the solid product reformer **15**, to ensure that substantially no undesired gaseous impurity is contained in the solid product reformer **15**.

The solid product reformer **15** operates at a temperature of about 250°C to about 400°C, and preferably about 250°C to about 350°C. This can reduce the content of impurities such as organic volatiles in the solid products, thereby improving the quality of the resulting solid products (primarily carbon black). The solid products of the pyrolysis reaction are introduced through the first solid product inlet **P08** into the solid product reformer **15** and then, by means of the second axial transporting structure **151**, are moved forward in the solid product reformer **15** while undergoing the reforming process. The rotational speed of the second axial transporting structure **151** is controlled by the drive device **153** to control the dwell time of the materials in the solid product reformer **15**. In some embodiments of the present invention, the materials are allowed to dwell in the solid product reformer **15** for about 30 min to 60 min in total to ensure a good reforming effect.

The reformed high-temperature solid products are introduced out of the first solid product outlet **P09** into the solid product cooler **41** through the second solid product inlet **P03** and then, by means of the third axial transporting structure **411**, are moved forward in the solid product cooler **41** while being cooled therein. Here, the rotational speed of the third axial transporting structure **411** is controlled by the drive device **413** to ensure that the solid products dwell in the solid product cooler **41** for a period of time sufficient to achieve the cooling effect. In some embodiments of the present invention, the materials dwell in the solid product cooler **41** for about 10 min to about 20 min in total, and the solid products are cooled to a temperature of about 40°C to about 60°C.

The cooled carbon black is introduced out of the second solid product outlet **P14**, and then fed into the screening device **43** disposed at the downstream of the solid product cooler **41** to remove the steel wires and screen out the impurities of large particle sizes. Subsequently, the screened solid products, primarily carbon black, are introduced into the grinding device **45** disposed at the downstream where they are ground into particle sizes complying with the market demand. Thus, products of great economic values that can be used for industrial purposes are obtained.

The gas products of the pyrolysis reaction are introduced through the first gas inlet **P17** into the first condenser **51**, and are washed in the first condenser **51** by a washing oil introduced through the washing-oil inlet **P19** to be cooled down to a temperature of about 90°C to about 100°C and to remove the entrained carbon black particulates. The cooling temperature of the gas products may be controlled by regulating the flow rate and temperature of the washing oil. Then, the pyro-oil that has been condensed into liquid and the carbon black flow directly into the oil-mud separator **53** disposed beneath the first condenser **51** where the mud is separated through sedimentation. The separated mud is periodically discharged out of the mud-discharging opening **P2** and, optionally, is fed into the reactor **11** through the charge port **P01** anew for further pyrolysis or introduced directly into, for example, a mud treatment tank for disposal. On the other hand, the pyro-oil separated through sedimentation is introduced from the first pyro-oil outlet **P20** into the pyro-oil cooler **55** through the first pyro-oil inlet **P22** to be further cooled to a temperature of about 35°C to about 50°C, and is finally discharged through the second pyro-oil outlet **P23**. A portion of the resulting pyro-oil is introduced from the washing-oil inlet **P19** into the first condenser **51** for use as a washing oil, and the remaining portion of the pyro-oil may be optionally stored in an oil storage tank, used as a fuel of the combustion furnace **13**, or subjected to further processing to produce oil products of a greater economic value. The cooled but uncondensed gas components are introduced out of the third gas outlet **P18** and fed through the third gas inlet **P24** into the second condenser **57** for further condensing. Thus, oils and gases uncondensed in the first condenser **51** are condensed to a lower temperature so that pyro-oils with a lower flashing point can be collected. On the other hand, pyro-gases that are still uncondensed are introduced into the combustion furnace **13** for use as fuels.

Now, the present invention will be further illustrated with reference to the following examples.

### Example 1: Pyrolysis of waste tires

### [Operation conditions]

Particle size of waste tire particulates: about 3 cm to about 7 cm
Feeding rate: about 1000 kg/hour
Reactor:
   Temperature: about 450°C
   Retention time: about 60 min
Solid product reformer:
   Temperature: about 320°C
   Retention time: about 50 min
Solid product cooler:
   Retention time: about 15 min

### [Description]

A waste tire pyrolysis reaction was carried out by using the continuous pyrolysis system shown in **FIG. 1** (operation details of which are as described above) under the afore-mentioned operation conditions. The operation duration was about 3,000 hours.

### Example 2: Analysis of product stability

According to the standard test methods as listed in Table **1**, analysis was made on the compositions of the pyro-oil obtained in Example **1**, with the results recorded in Table **1** (sampling once per hour); and according to the standard test methods as listed in Table **2**, analysis was made on the compositions of the carbon black obtained in Example 1, with the results recorded in Table **2** (sampling once per hour).

**Table 1**

| | Unit | Test Method | Value |
|---|---|---|---|
| Heat of combustion | kcal/kg | ASTM D240 | about 9,800 to about 10,200 |
| Density (at 15°C) | g/ml | ASTM D4052 | about 0.93 to about 0.94 |
| Viscosity (at 40°C) | mm²/s | ASTM D445 | about 5.9 to about 9.2 |
| Flash point | °C | ASTM D93 | about 30 to about 40 |
| Water content | volume% | ASTM D95 | about 0.2 to about 0.5 |
| Water & sediments | volume% | ASTM D1796 | about 0.25 to about 0.6 |
| Sulfur content | w.t.% | ASTM D2622 | about 1.0 to about 1.2 |
| Flow point | °C | ASTM D5950 | about -15 to about -18 |

**Table 2**

| | Unit | Test Method | Value |
|---|---|---|---|
| pH value | | ASTM D3838 | about 8.5 to about 8.9 |
| Nitrogen surface area | m²/g | ASTM D3663 | about 62 to about 78 |
| Flow density | g/cm³ | ASTM D2854 | about 0.38 to about 0.42 |
| Ash content | w.t.% | ASTM D2866 | about 11 to about 15 |
| Sulfur content | w.t.% | ASTM D1619A | about 2.2 to about 2.5 |
| Grit 325 mesh and above | ppm | | about 320 to about 500 |
| Volatility | w.t.% | ASTM D3175 | about 2 to about 5 |
| Iodine value | mg/g | ASTM D1510 | about 85 to about 105 |

As can be seen from the results shown in Table **1** and Table **2**, the products produced by the continuous pyrolysis system of the present invention demonstrate very stable quality (with very small variations in the parameters) without the problem of poor and varied quality as in conventional pyrolysis products. Therefore, these products can be used for industrial purposes.

In summary, the continuous pyrolysis system of the present invention can provide carbon black and pyro-oil of stable quality that have great economic values and may be used for industrial purposes. Thus, the products that were produced with the pyrolysis technology of the prior art, which could not be used for industrial purposes due to it varying quality, are no longer produced with the current invention. In addition, the current invention eliminates the disposal of solid products generated from the conventional pyrolysis reaction, and also reduces the environmental pollution caused by producing carbon black through an additional process, which represents great industrial applicability.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A continuous pyrolysis system, comprising:
a reactor having a charge port, a discharge port and a first gas outlet and a first axial transporting structure installed therein;
a heat source generator for supplying heat necessary for carrying out a pyrolysis reaction in the reactor;
a solid product reformer for performing a reforming process for a solid product of the pyrolysis reaction, having a first solid product inlet, a first solid product outlet and a second gas outlet, and a second axial transporting structure installed therein, wherein the first solid product inlet communicates with the discharge port of the reactor; and
a gas barrier component for preventing a gas product of the pyrolysis reaction from entering the solid product reformer and transporting the solid product of the pyrolysis reaction into the solid product reformer, the gas barrier component being installed in a channel communicating the first solid product inlet and the discharge port of the reactor.

2. The system as claimed in Claim 1, wherein the hest source generator is a combustion furnace.

3. The system as claimed in anyone of the preceding claims, wherein the heat source generator supplies heat necessary for the solid product reformer.

4. The system as claimed in anyone of the preceding claims, wherein the gas barrier component is a gastight valve.

5. The system as claimed in anyone of the preceding claims, further comprising a solid product processing device communicating with the first solid product outlet.

6. The system as claimed in Claim 5, wherein the solid product processing device comprises a solid product cooler having a second solid product inlet and a second solid product outlet and a third axial transporting structure installed therein, the second solid product inlet communicating with the first solid product outlet.

7. The system as claimed in Claim 5 or 6, wherein the third axial transporting structure has a central axis and comprises a plurality of spiral vanes.

8. The system as claimed in anyone of the preceding claims, further comprising a gas product processing device communicating with the first gas outlet and the second gas outlet.

9. The system as claimed in Claim 8, wherein the gas product processing device comprises a first condenser, an oil-mud separator communicating with the first condenser and a pyro-oil cooler, wherein the first condenser has a first gas inlet, a third gas inlet and a washing-oil inlet, and communicates with the first gas outlet of the reactor through the first gas inlet; the oil-mud separator comprises a first pyro-oil outlet and a mud-discharging opening; and the pyro-oil cooler has a first pyro-oil inlet and a second pyro-oil outlet, and communicates with the first pyro-oil outlet of the oil-mud separator through the first pyro-oil inlet.

10. The system as claimed in anyone of the preceding claims, wherein each of the first axial transporting structure and the second axial transporting structure has a central axis and comprises a plurality of spiral vanes.

11. The system as claimed in anyone of the preceding claims, which is used for the treatment of waste tires.

12. A continuous pyrolysis method, comprising using the system as claimed in anyone of the preceding claims.

13. The method as claimed in Claim 12, comprising performing a solid product processing procedure for the solid product of the pyrolysis reaction.

14. The method as claimed in Claim 13, wherein the solid product processing procedure comprises a cooling step.

15. The method as claimed in Claim anyone of Claims 12 to 14, further comprising performing a gas product processing procedure for the gas product of the pyrolysis reaction.

16. The method as claimed in anyone of Claims 12 to 15, wherein the pyrolysis reaction is carried out at a temperature ranging from about 350°C to about 550°C.

17. The method as claimed in anyone of Claims 12 to 16, wherein solid product reformer is operated at a temperature ranging from about 250°C to about 400°C.
